# EUROPEAN PATENT SPECIFICATION

(11) **EP 1 883 258 B1**
(45) Date of publication and mention of the grant of the patent: **29.08.2012**
(21) Application number: 06291215.9
(22) Date of filing: 25.07.2006
(51) Int. Cl.: H04W 16/06

(54) **Method of sharing radio resources, computer program product, radio resource management module, and radio communication network**
Verfahren zur Funkresourcenaufteilung, Computerprogrammprodukt, Funkresourcenverwaltungsmodul und Funkkommunikationsnetz
Procédé pour partager de ressources radio, produit programme d'ordinateur, module de gestion de ressources radio et réseau de communication radio

(43) Date of publication of application: 30.01.2008
(73) Proprietor: Alcatel Lucent, 75007 Paris (FR)
(72) Inventor: Karla, Ingo, 46514 Schermbeck (DE); Sigle, Rolf, 73630 Remshalden (DE); Piao, Guihua, 34119 Kassel (DE); David Dr., Klaus, 34414 Warburg (DE)
(74) Representative: Wetzel, Emmanuelle

(56) References cited:
- EP-A- 1 220 557
- EP-A- 1 569 476
- WO-A-97/09838
- WO-A-99/17575
- US-A1- 2003 181 213

## Description

### Background of the invention

The present invention relates to a method of sharing radio resources between at least a first radio communication system and a second radio communication system, each of said radio communication systems owning a respective predefined spectrum for allocating resources, said allocation being performed at a respective Radio Resource Management module.

The present invention also relates to a Radio Resource Management module for use in a radio communication system owning a predefined spectrum for allocating radio resources.

Furthermore, the present invention relates to a radio communication network and to a computer program product for use in sharing radio resources between at least a first radio communication system and a second radio communication system,
wherein each of said radio communication systems owns a respective predefined spectrum for allocating resources, said allocation being performed at a respective Radio Resource Management module.

According to an article by T. Weiss and F. Jondral, "Spectrum Pooling: An innovative strategy for the enhancement of spectrum efficiency", IEEE Commun. Magazine, pp. 8-14, March 2004, measurements show that only little of the legally allocated radio spectrum is actually used. This low actual use age of the legally allocated radio spectrum is the starting point of "Spectrum Pooling", which basically represents the idea of merging spectral ranges from different spectrum owners (military, trunked radio, etc.) into a common pool. In this way, rental users may obtain access to spectral ranges they have not yet been allowed to use, and the actual license owners can tap new sources of revenue for a good they have not been using intensively before.

However, for utilising this approach, Radio Resource Management (RRM) of the rental network - hereinafter also referred to as "first radio communication system" - requires information whether legally owned / allocated resources in another radio network - hereinafter also referred to as "second radio communication system" - are available for use by the first radio communication system before allocating connections in a respective spectrum.

EP 1220557 discloses a wireless communication system which includes communication resource with a number of Operators providing communication on the communication resource. A first portion of said communication resource is dedicated to a first operator and a second portion of said resource is dedicated as a shared resource.

WO 99/17575 discloses a allocation of data transmission resources between different networks. In a first step, the available transmission resources are dynamically divided between the different networks. In a second step, the networks divide the resources that have been allocated for their use among their users by their own channel allocation methods.

EP 1 569 476 A1 describes a method for the management of a radio communication system that allows a simultaneous initiation of a radio communication for mobile stations of different mobile radio communication systems in a single frequency spectrum. A central controller receives the frequency spectrums and mobile radio communication technologies used by the different communication systems, so that the central controller may complete the selection process of feature sharing of the frequency spectrum between the different systems.

According to the prior art, said information is obtained from measurements "in the air", i.e., measurements of the radio spectrum are carried out in order to detect whether or not a legally allocated spectral range of the second radio communication system is being used or not. In this way, the prior art approach suffers from the disadvantage of relying on uncertain "in the air" measurements the results of which are generally not very reliable. Furthermore, spectrum pooling using the above-described "in the air" measurements, e.g. via wireless detection, always is a reactive process, which entails corresponding performance impairments.

### Object of the invention

It is the object of the present invention to provide a method of the above-defined type as well as devices for translating said method into practise, which provide a more efficient approach to the concept of spectrum pooling or spectrum sharing and which are more reliable then prior art solutions.

### Summary of the invention

The invention provides a method, a computer program product, a Radio Resource Management module, and a radio communications network as described in the independent claims, Further embodiments are described in the dependent claims.

According to a first aspect of the present invention, the object is achieved by providing a method of the above-defined type, which comprises the steps of:
- exchanging status information provided by said Radio Resource Management modules in connection with allocated and /or free radio resources between the first radio communication system and the second radio communication system;
- allocating radio resources in at least one of the first and second radio communication systems in accordance with said status information.

According to a second aspect of the present invention the object is achieved by providing a method of the above-defined type, which comprises the steps of:
- requesting and / or proposing additional resources from / to the second radio communication system by the first radio communication system;
- deciding by the Radio Resource Management module of the second radio communication system whether or not to lend / borrow the requested / proposed resources based on its own status in connection with allocated and / or free radio resources.

According to a third aspect of the present invention the object is achieved by providing a computer program product of the above-defined type, which comprises code sequences operable to provide:
- requesting and / or proposing additional resources from / to the second radio communication system by the first radio communication system;
- deciding by the Radio Resource Management module of the second radio communication system whether or not to lend / borrow the requested / proposed resources based on its own status in connection with allocated and / or free radio resources.
   and /or
- exchanging status information provided by said Radio Resource Management modules in connection with allocated and /or free radio resources between the first radio communication system and the second radio communication system;
- allocating radio resources in at least one of the first and second radio communication systems in accordance with said status information;
   when executed in operative connection with the respective corresponding Radio Resource Management module.

According to a fourth aspect of the present invention, the object is achieved by providing a Radio Resource Management module of the above-defined type, which comprises:
- means for determining status information in connection with allocated and /or free radio resources of the radio communication system;
- means for transmitting the status information to a Cooperative Spectrum Sharing Radio Resource Management module in operative connection with at least said radio communication system;
- means for allocating radio resources in accordance with control signalling received from the Cooperative Spectrum Sharing Radio Resource Management module.

According to a fifth aspect of the present invention the object is also achieved by providing a radio communication network, which comprises:
- at least a first radio communication system covering a first area, the first radio communication system owning a predefined spectrum for allocating radio resources;
- at least a second radio communication system covering a second area, the second radio communication system owning a predefined spectrum for allocating radio resources distinct from the predefined spectrum of the first radio communication system;
- a first Radio Resource Management module and a second Radio Resource Management module for radio resource allocation in the first radio communication system and the second radio communication system, respectively;
- at least one Cooperative Spectrum Sharing Radio Resource Management module associated with the first and second radio communication systems and adapted to decide whether to use radio resources from the first radio communication system and / or the second radio communication system for providing radio services,
wherein the first radio communication system and the second radio communication system are connected for requesting and / or proposing additional resources from / to the second radio communication system by the first radio communication system and /or for exchanging status information provided by said Radio Resource Management modules in connection with allocated and /or free radio resources, and
wherein the at least one Cooperative Spectrum Sharing Radio Resource Management module is adapted to control allocating of radio resources in at least one of the first and second radio communication systems in accordance with a decision by the second radio communication system whether or not to lend / borrow the requested / proposed resources and in accordance with said status information, respectively.

Thus, in accordance with a general idea underlying the present invention it is proposed to use radio resource status information from the second radio communication system, i.e. the Radio Resource Management of the second radio communication system, and to signal this information to the Radio Resource Management of the first radio communication system such that the latter obtains information concerning the radio resource status of the second radio communication system without requiring any "in the air" measurements. Alternatively or additionally, upon request for additional resources by one of the radio communication systems the at least one other radio communication system may decide whether or not to give away the requested resources based on its own status, so that the requested resources may be proactively provided to the requesting radio communication system equally without any "in the air" measurements.

In order to achieve fast and reliable communication of said status information, in an embodiment of the method in accordance with the present invention the status information are exchanged over a dedicated network signalling path between the first radio communication system and the second radio communication system. Said dedicated signalling path may be devised as a fixed network signalling path or as a wireless, e.g. microwave, network signalling path.

In a corresponding embodiment of the radio communication network in accordance with the present invention that the first and second radio communication systems are connected to a dedicated network signalling path for exchanging said status information.

In order to provide for the required communication between the first and second radio communication systems, in an embodiment of the computer program product in accordance with the present invention the latter further comprises code sequences operable to provide a dedicated network signalling path between the first radio communication system and the second radio communication system, said path including a number a interfaces for inter-connecting the first radio communication system and the second radio communication system. In one exemplary embodiment of the invention said path may include:
- a first interface to the Radio Resource Management module of the first radio communication system;
- a second interface to the Radio Resource Management module of the second radio communication system;
- a third interface for inter-connecting the first radio communication system and the second radio communication system.

Via said interfaces, radio resource status information can easily be transferred between the first and second radio communication systems, i.e. the respective RRMs, in operative connection with at least one hierarchically superior control / decision unit generally referred to as Corporative Spectrum Sharing Radio Resource Management module (CSS-RRM), as already mentioned above.

In a particular embodiment of the invention the CSS-RRM receives said radio resource status information from the second and / or the first radio communication system, decides on where to allocate radio resources required to fulfil a given request, and commands allocating said resources in either one or in both of the first and second radio communication systems. In this way, CSS-RRM serves as a master function in that particular embodiment, which can be referred to as a centralized architecture.

However, the above-described centralized architecture is only one possible implementation of the present invention. Even more promising for practical use is a distributed architecture, in which both (i.e. all) or some of the employed radio access technologies (e.g., GSM, UMTS, etc.), i.e., the respective radio communication systems possess a Spectrum Sharing (CSS) module. These modules communicate with each other to arrange sharing of the spectrum. In a first embodiment of said distributed approach the individual Spectrum Sharing modules decide on their own RRM resource situation. If required, they may subsequently send a message to a cooperating CSS-RRM module comprising a request for borrowing part of the spectrum owned by the radio communication system associated with said cooperating CSS-RRM. Cooperation could be further enhanced if the requesting CSS-RRM knows about the resource situation in the other CSS-RRM, especially if there is more than one CSS-RRM to ask for required additional spectrum.

Moreover, in a further embodiment, coverage situation and frequency range of the spectrum of the cooperating radio communication system can be an input for the above-described request. Alternatively, a given CSS-RRM may send out messages which propose lending part of the spectrum owned by its associated radio communication system to other (cooperating) radio communication systems.

In this context and in accordance with a further embodiment of the radio communication network in accordance with the present invention the first area covered by the first radio communication system at least partly overlaps with the second area covered by the second radio communication system

However, if an operator owns certain frequencies (resources) which is used for a first radio access technology, RAT1, but deploys this technologies only at certain hot spots (i.e., geographically confined areas such as radio cells), the associated frequencies could be used by a second access technology, RAT2, in totally different non-overlapping areas. In this case the RRM associated with the radio communication system using RAT1 needs to know that said frequencies are not used in certain areas, even if there is no communication system of type RAT1 in these areas. In this case the first communication system could use all the resources of the second communication system in those cells which are not covered by the second communication system. Hence, also non-overlapping areas of different radio communication systems are of interest for the CSS-RRM.

In practise, there will be several instances of the RRMs of both systems e.g. in each Radio Network Controller (RNC) there are RRM functions. If, e.g., an UMTS system wants to use resources of another system (e.g., WIMAX) the RRM of a certain RNC needs to know if a WIMAX system exists in the envisaged cell (in this case the approach described in the present document is applicable) or not. In the second case, the UMTS RRM could simply use the resources of the WIMAX system, as described above. In a corresponding further embodiment of the method in accordance with the present invention the latter comprises enabling said method if both said first and second radio communication systems exist in an envisaged area for resource sharing.

In another embodiment of the method in accordance with the present invention the latter further comprises:
- checking, by the first radio communication system, if at least part of its owned spectrum is suited for allocating requested resources;
- using at least part of the free resources of the second radio communication system for allocating at least part of the requested resources.

In order to achieve optimum proactive spectrum pooling, in yet another embodiment of the method in accordance with the present invention exchanging the status information is triggered by changes of resource allocation in at least one of the first and second radio communication systems.

Further advantages and characteristics of the present invention can be gathered from the following description of preferred embodiments given by way of example only with reference to the appended drawings. Features of the present invention mentioned above as well as below can be used either individually or in conjunction without departing from the basic idea underlying the present invention.

### Brief description of the drawings

- Fig. 1: is a schematic diagram of a first embodiment of the radio communication network in accordance with the present invention;
- Fig. 2: is a schematic diagram of a second embodiment of the radio communication network in accordance with the present invention; and
- Fig. 3: is a flow chart of an embodiment of the method of sharing radio resources in accordance with the present invention.

### Detailed description of the drawings

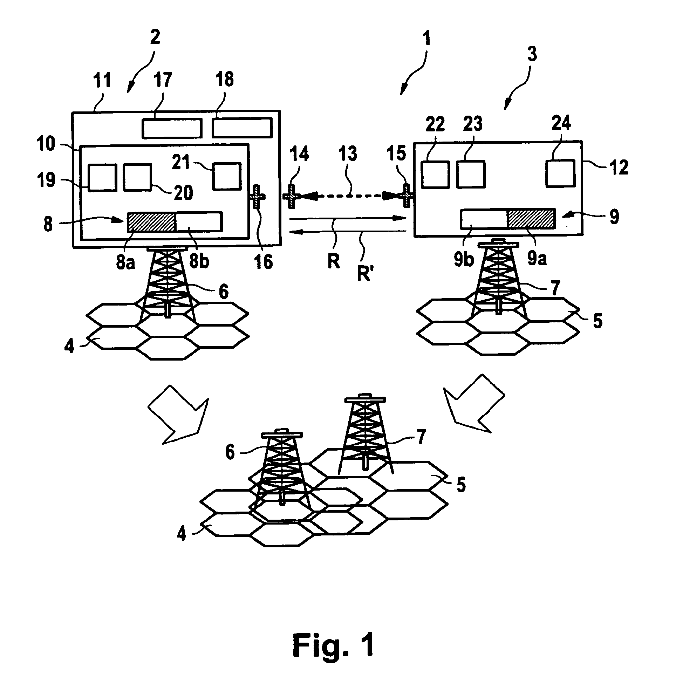

Fig. 1 is a schematic diagram of a first embodiment of the radio communication network in accordance with the present invention. Said radio communication network is generally denoted 1 and comprises at least a first radio communication system 2 and at least a second radio communication system 3. The first radio communication system 2 covers a first area 4, illustrated by means of a first array of radio cells. The second radio communication system 3 covers a second area 5, illustrated by means of a second array of radio cells. Radio coverage in said first and second areas 4, 5, respectively, is provided by means of at least one respective base station 6, 7. That is, first radio communication system 2 and the second radio communication system 3 are devised in the form of infrastructure-based radio communication systems in contrast to ad-hoc radio communication systems.

As can be seen from the lower part of Fig. 1 and as indicated by means of thick arrows, the first radio communication system 2 and the second radio communication system 3 do at least partly cover the same (geographical) area, i.e., the first area 4 associated with the first radio communication system 2 and the second area 5 associated with the radio communication system 3 do at least partly overlap.

Each of the first and second radio communication systems 2, 3 of Fig. 1 owns a respective predefined (legally allocated) spectrum for allocating radio resources. Said owned spectra are illustrated by means of respective black-and-white bars 8, 9 in Fig. 1. For instance, the black areas 8a, 9a in said spectra 8, 9 denote a part of the legally spectrum which is currently being used for allocating radio resources in radio communication systems 2, 3, respectively. Accordingly, the white areas 8b, 9b of the respective spectra 8, 9 denote a spectral range which is not currently being used for allocating radio resources by the respective radio communication system 2, 3 and which is therefore - in principle - eligible for allocation to a cooperating radio communication system.

In the embodiment of Fig. 1, the predefined allocating spectra of the first radio communication system 2 and the second radio communication system 3, respectively, are arranged in a complementary fashion, i.e., the first radio communication system 2 owns a first part (spectral range 8) of the total available radio spectrum whereas the second radio communication system 3 owns a second, distinct part (spectral range 9) of the available radio spectrum.

The first radio communication system 2 comprises a dedicated first Radio Resource Management (RRM) module 10 and a Corporative Spectrum Sharing (CSS) RRM 11. In the embodiment shown, the second radio communication system 3 also comprises a dedicated second RRM 12, but no CSS-RRM. This particular embodiment thus generally corresponds to the centralized architecture described farther up. It should be noted however, that said centralised architecture also includes a stand-alone CSS-RRM server which is neither collocated with the first nor the second communication system.

The two radio communication systems 2, 3 are connected by means of a dedicated network signalling path 13, as shown by means of a dotted line in Fig. 1. Network signalling path 13 can be either one of a fixed network signalling path and a wireless (e.g. microwave) network signalling path and extends between the CSS-RRM 11 of the first radio communication system 2 and the RRM 12 of the second radio communication system 3. At the first radio communication system 2, the dedicated network signalling path 13 connects with an interface 14 for inter-connecting the first radio communication system 2, i.e. the CSS-RRM 11 thereof, and the RRM 12 of the second radio communication system 3. To this end, a further interface 15 to the second radio communication system 3 is provided at the RRM 12 of the second radio communication system 3. Additionally, another interface 16 is provided on the RRM 10 of the first communication system 2. Note that at least from a logical point of view interface 14 and interface 15 are the same. However, physically there may be two distinct interfaces if both are implemented in different nodes of the radio communication network.

As further depicted in Fig. 1, the CSS-RRM 11 of the first radio communication system 2 comprises decision means 17 and transceiving means 18, a functioning of which will become apparent later.

The RRM 10 of the first radio communication system 2 further comprises determining means 19, transmitting means 20, and allocating means 21, a functioning of which will also become apparent later.

The RRM 12 of the second radio communication system 3 further comprises determining means 22, transmitting means 23, and allocating means 24.

Operation of the above-described radio communication network 1 in accordance with the present invention will be described in the following:
Allocation of radio resources for communication in a respected covered area 4, 5 is controlled by a respective RRM 10, 12 in operative connection with a corresponding base station 6, 7 belonging to the radio communication system 2, 3 in question. In general, radio resources in each of the radio communication systems 2, 3 are allocated based on the owned part 8, 9 of the total available radio spectrum. However, in the embodiment shown, the first radio communication system 2 may use (share) free radio resources which are originally owned by the second radio communication system 3 owing to the functionality of CSS-RRM 11.

To this end, status information concerning allocated and /or free radio resources are exchanged between the RRMs 10, 12 of the first and second radio communication systems 2, 3 through the dedicated network signalling path 13 via interfaces 14-16. In other words: through the dedicated network signalling path 13 the RRMs 10, 12 are enabled to proactively exchange information concerning a status of their owned radio spectra 8a, 9a under control of CSS-RRM 11. Said information exchange is denoted by means of arrows R, R' in Fig. 1.

An alternative approach consists in one radio communication system (e.g. radio communication system 2) requesting to borrow further spectrum parts from the other radio communication system (radio communication system 3), wherein the other radio communication system decides on lending parts of its owned resources in accordance with its resource status as determined by respective determining means 19, 22. Said request (R) and a corresponding reply (R') are sent along dedicated network signalling path, too.

In an improved version of said alternative approach the requesting system (e.g. radio communication system 2) provides some load information of its own system together with the request which enables comparing the status of both systems by the requested communication system (radio communication system 3) and to answer the request.

Note that the exchange of load information must not necessarily be done together with the borrowing request; it could be done independently in advance in order to further improve the proposed mechanism, especially if more than two communication systems are involved.

In the embodiments of Fig. 1, the determining means 19 are used to determine status information in connection with allocated and /or free radio resources of the first radio communication system 2 and transmit said information to the CSS-RRM 11 through transceiving means 18 and interface 16. That is, the first radio communication system 2 checks if at least part of its owned spectrum 8 is suited, e.g. free, for allocating requested radio resources. Said resources may, for instance, have been requested by a mobile terminal (not shown) present inside covered area 4.

At essentially the same time, determining means 22 of the second radio communication system 3 are used to determine similar status information in connection with allocated and /or free radio resources of the second radio communication system 3. Transmitting means 23 of the second radio communication system 3 are then used for transmitting said status information to the CSS-RRM 11 of the first radio communication system 2 through the dedicated network signalling path 13 via interfaces 14 and 15. In this context, transceiving means 18 of the CSS-RRM 11 are used for receiving said status information from the RRM 12 of the second radio communication system 3 and from the RRM 10 of the first radio communication system 2.

In this way, in the shown embodiment decision means 17 of the CSS-RRM 11 of the first radio communication system 2 are proactively informed about a totality of allocated and /or free radio resources in both the first and the second radio communication system 2, 3, respectively in the centralized architecture of Fig. 1. Thus, if suitable radio resources are not available in the first radio communication system 2 in order to fulfil a given request, e.g., due to an amount of requested resources and / or traffic conditions within the first radio communication system 2, then decision means 17 may decide that at least part of the requested resources be allocated using spectral resources 9 originally owned by the second radio communication system 3. A corresponding decision is transmitted from decision means 17 through transceiving means 18 and interface 16 to the RRM 10 of the first radio communication system 2, the allocating means 21 of which allocate radio resources in accordance with the determined and / or received status information in the first radio communication system 2, and through transceiving means 18 and interfaces 14, 15 to the RRM 12 of the second radio communication system 3, the allocating means 24 of which are used for allocating additional radio resources in accordance with the determined and /or received status information in the second radio communication system 3. Again, corresponding control signals (not shown) transmitted by the decision means 17 / transceiving means 18 are transmitted to the respective RRMs 10, 12 using the dedicated network signalling path 13 and /or corresponding interfaces 14-16.

However, depending on the specific status information determined by means of the determining means 19, 22, decision means 17 may also command allocating requested resources entirely in only one of the two radio communication systems 2, 3.

The CSS-RRM 11, RRM 10, RRM 12 as well as the individual means and interfaces comprised therein are preferably devised in software form by providing a computer program product comprising suitable program code sequences, as known to a person skilled in the art.

In the above described embodiment in accordance with the present invention, radio resources, i.e. the radio spectrum, of the second radio communication system 3 are checked if there are not sufficient resources in the first radio communication system 2 to fulfil a given request. If useful, however, the above described scenario can also be reversed, i.e., if the second radio communication system 3 is unable to fulfil a given request in that system, than the spectrum of the first radio communication system 2, i.e. spectral range 8a, could be checked and potentially be used for allocating radio resources to services requested within the second radio communication system 3. To this end, the CSS-RRM 11 may receive status information from the first radio communication system 2 via interface 16. Based on the determined and / or received status information the CSS-RRM 11 may then command radio resource allocation through the respective allocating means 21, 24 of the first and second radio communication systems 2, 3, respectively, as described above.

In this context, interface 16 is used by the CSS-RRM 11 for communication with the RRM 10 of radio communication system 2, interface 14 is used by the CSS-RRM 11 for communication towards the second radio communication system 3, and interface 15 is used by CSS-RRM 11 as an interface to the second radio communication system 3, and vice versa.

In this way, for Cooperative Spectrum Sharing the CSS-RRM 11 decides whether to use resources from its own spectrum 8, i.e. the spectrum owned by the first radio communication system 2 or from the spectrum 9 of the second radio communication system 3 for ongoing or (requested) new services. In order to arrive at a corresponding decision (taken by means of decision means 17) a simple approach within the context of the present invention has been described as follows: If a part 8b of the owned spectrum 8 of the first radio communication system 2 is free and / or suitable for providing said services it is used with priority. However, if said spectrum part 8b is unavailable and / or not suited for providing a requested service a check is performed, as to whether at least part, e.g. part 9b, of the owned spectrum 9 of the second radio communication system 3 is available. If this is the case, at least part of the spectrum 9 of the second radio communication system 3 is used for allocating at least part of the radio resources originally requested within the first radio communication system 2. For said check, which is performed by the decision means 17 of Fig. 1, status information about utilization of spectrum 9 in radio communication system 3 is required. In the above described embodiment of the present invention, said information is not measured "in the air" as in prior art radio communication networks, but is provided via the dedicated network signalling path 13 from the RRM 12 of the second radio communication system to the CSS-RRM 11. In this context, communication between the CSS-RRM 11 and the RRMs 10, 12 of the first and second radio communication systems 2, 3, respectively, occurs via interfaces 14 - 16.

Preferably, every change in spectral resource utilization of the second radio communication system 3 is signalled to the CSS-RRM 11 with a predefined temporal resolution ia interface 15, signalling path 13, and interface 14. Being provided with corresponding up-to-date status information from the RRM 10 of the first radio communication system 2, the CSS-RRM 11, i.e. its decision means 17, is thus enabled to decide and command resource sharing between the first and second radio communication systems 2, 3.

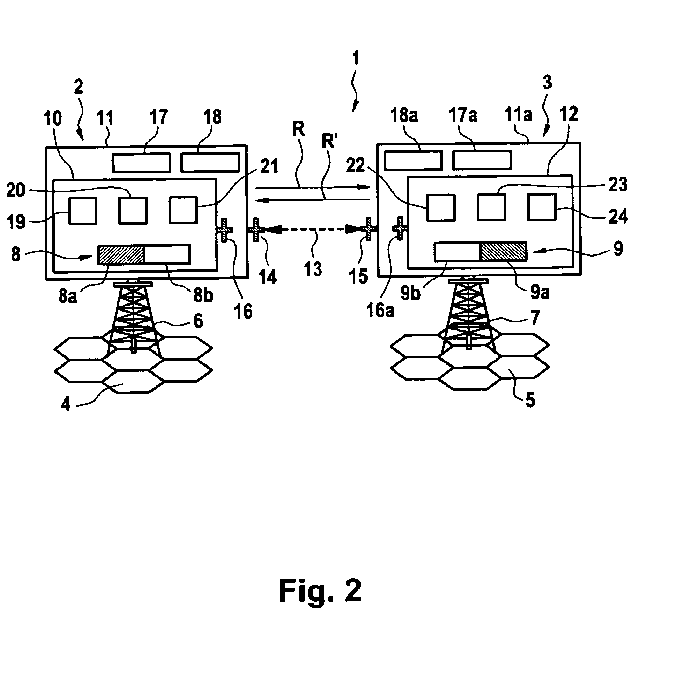

Fig. 2 is a schematic diagram of a second embodiment of the radio communication network in accordance with the present invention. Said radio communication network is generally denoted 1 and again comprises at least a first radio communication system 2 and at least a second radio communication system 3.

The radio communication network 1 of Fig. 2 generally comprises the same or similar elements as the radio communication network of Fig. 1 which have been assigned the same reference numerals. However, in contrast to the radio communication network of Fig. 1 the radio communication network 1 of Fig. 2 comprises a second CSS-RRM 11 a associated with the second radio communication system 3. Like CCS-RRM 11 said second CSS-RRM 11 a comprises decision means 17a and transceiving means 18a, a functioning of which generally corresponds to that described in connection with CSS-RRM 11 of Fig. 1. Furthermore, an additional interface 16a generally equivalent to interface 16 is provided between CSS-RRM 11 a and associated RRM 12.

In this way, radio communication network 1 of Fig. 2 represents the above-mentioned decentralized or distributed network architecture, according to which more than only one radio communication system possesses a Spectrum Sharing (CSS) module 11, 11 a. Said plurality of CSS-RRMs communicate with each other to arrange sharing of the spectrum, as indicated in exemplary fashion by arrows R, R' in Fig. 2.

In accordance with said distributed approach the individual Spectrum Sharing modules 11, 11 a decide on their own RRM resource situation by employing respective decision means 19, 22. As depicted in exemplary fashion in Fig. 2, each of said modules, for instance CSS-RRM 11, may subsequently send a message R to a cooperating CSS-RRM module, e.g. CSS-RRM 11a, comprising a request for borrowing part of the spectrum owned by the radio communication system 3 associated with said cooperating CSS-RRM 11 a. In order to further enhance cooperation the requesting CSS-RRM 11 is continuously provided with information about the current resource allocation status at the other CSS-RRM by determining means 22 / transceiving means 23 via network signalling path 13, especially if there is more than one CSS-RRM to ask for required additional spectrum.

In this context, a coverage situation and frequency range of the spectrum 9 of the cooperating radio communication system 3 are transmitted to radio communication system 2 via network signalling path 13 and form an input for the above-described request R. Alternatively, a given CSS-RRM, e.g. CSS-RRM 11 a, may send out messages (not shown) on network signalling path 13 which propose lending part of the spectrum 9 owned by its associated radio communication system 3 to other (cooperating) radio communication systems, e.g. radio communication system 2.

Obviously, the respective roles of CSS-RRM 11 and CSS-RRM 11 a in Fig. 2 could be reversed. Furthermore, obviously more than only two radio communication systems 2, 3 may be cooperating in accordance with the embodiments of Fig. 2.

Moreover, in accordance with the present invention, any suitable combination of the centralized architecture of Fig. 1 and the distributed architecture of Fig. 2 can be used, wherein some but not all radio communication systems have their own CSS-RRM module, as will be appreciated by a person skilled in the art..

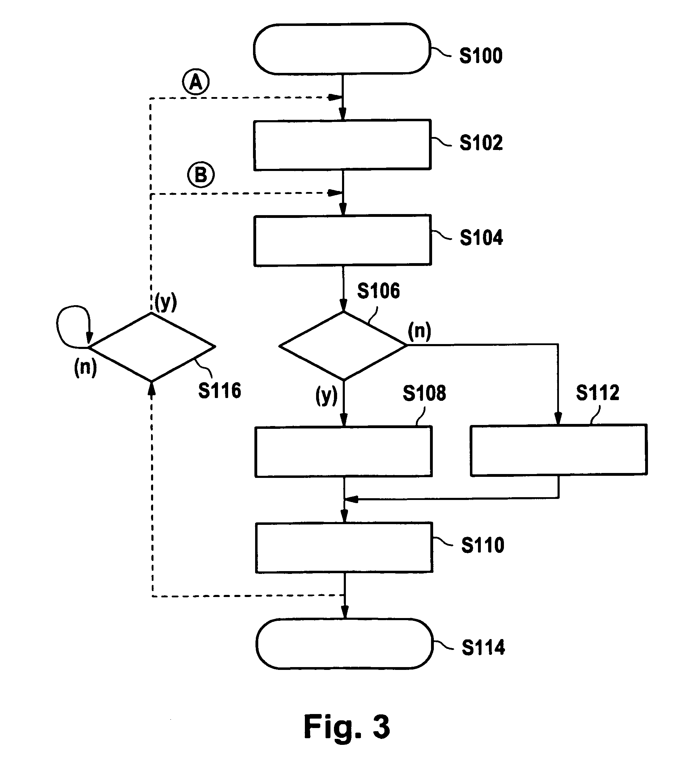

Fig. 3 is a flow chart of an embodiment of the method in accordance with the present invention.

The method commences in step S100. In subsequent step S102 status information concerning resource utilization in the first and second radio communication system 2, 3 (Fig. 1) is determined by corresponding determining means 19, 22 (Fig. 1). Said status information is transmitted by corresponding transmitting means 20, 23 to CSS-RRM 11, i.e. corresponding transceiving means 18, through the dedicated network signalling path 13 via interfaces 16 and 15, 14, respectively.

Then, in step S104 a request for radio resources is issued within the first radio communication system 2 (Fig. 1). As stated before, such a request may be issued by a mobile terminal present inside coverage area 4 (Fig. 1). In subsequent decision step S106 is decided, e.g. by decision means 17 of CSS-RRM 11, whether or not suitable radio resources are available within the first radio communication system 2 to fulfil the request in step S104.

Note that the CSS-RRM might not be involved in all cases, e.g., if there are enough resources 8b available in the first radio communication system, it may not forward the request to the CSSRRM.

If the corresponding question in step S106 is answered in the affirmative (y), then in step S108 the required radio resources can be allocated entirely within the first radio communication system 2, i.e. within spectrum 8 (Fig. 1) by allocating means 21. Signalling information necessary for performing steps S106 and S108 are exchanged between the CSS-RRM 11 and RRM 10 via interface 16.

In subsequent step S110 the allocated radio resources are used for providing the requested services. However, it should be noted that a request for spectrum sharing might not be coupled with a single user service request but with a more general load status averaged over a certain time interval of the order of minutes.

If the question in step S106 is answered in the negative (n), i.e., no or not enough suitable resources are available within the first radio communication system 2, then in step S112 at least part of the requested resources are allocated using the owned spectrum 9 of the second radio communication system 3 following a release of said resources by the second radio communication system. Said allocation is performed by allocating means 24 of the second radio communication system 3. Corresponding command / signalling information is providing by decision means 17 and transceiving means 18 through the dedicated network signalling path 13 via interfaces 14, 15, based on the status information determined in above-described step S102.

The method in accordance with the present invention then continues with above-described step S110.

Generally, the shown embodiment of the method in accordance with the present invention terminates with step S114. However, in practise and in another embodiment of the method in accordance with the present invention the method will continue with a further decision step S116, as indicated by means of a dashed line in Fig. 2. Decision step S116 includes waiting for a change in resource utilization within the second radio communication system 3 (Fig. 1) (alternative A in Fig. 2) or for a new resource request within the first radio communication system 2 (Fig. 1) (alternative B). If at least a change in resource utilization within the second radio communication system 3 is detected in step S116 (y), then the method returns to step S102 (alternative A). However, if only a new request for resources is detected in step S116 (y), then the method returns to step S104 (alternative B). Otherwise, the method waits in step S116 (n), which is equivalent to saying that the previously allocated radio resources are continuously used in connection with step S110.

In this way, the present invention achieves enhanced shared allocation of radio resources without relying on "in the air" measurements with only low reliability.

## Claims

1. A method of sharing radio resources between at least a first radio communication system (2) and a second radio communication system (3), each of said radio communication systems owning a respective predefined spectrum (8, 9) for allocating resources, said allocation being performed at a respective Radio Resource Management module (10, 12), said method comprising the steps of:
- exchanging status information provided by said Radio Resource Management modules in connection with allocated and /or free radio resources (8a, 8b; 9a, 9b) between the first radio communication system and the second radio communication system;
- allocating radio resources in at least one of the first and second radio communication systems in accordance with said status information;
**characterised in that** exchanging the status information is triggered by changes of resource allocation in at least one of the first and second radio communication systems (2, 3), the method further comprising the steps of:
- requesting and / or proposing additional resources from / to the second radio communication system (3) by the first radio communication system (2);
- deciding by the Radio Resource Management module (12) of the second radio communication system (3) whether or not to lend / borrow the requested / proposed resources based on its own status in connection with allocated and / or free radio resources (9a, 9b).

2. The method of claim 1, **characterised in that** the status information are exchanged over a dedicated network signalling path (13) between the first radio communication system (2) and the second radio communication system (3).

3. The method of claim 1, further comprising:
- checking, by the first radio communication system (2), if at least part of its owned spectrum (8) is suited for allocating requested resources;
- using at least part of the free resources (9) of the second radio communication system (3) for allocating at least part of the requested resources.

4. The method of claim 1 comprising enabling said method if both said first and second radio communication systems (2, 3) exist in an envisaged area for resource sharing.

5. A computer program product for use in sharing radio resources (8, 9) between at least a first radio communication system (2) and a second radio communication system (3), wherein each of said radio communication systems owns a respective predefined spectrum (8a, 9a) for allocating resources, said allocation being performed at a respective Radio Resource Management module (10, 12), said computer program product comprising code sequences operable to provide:
- exchanging status information provided by said Radio Resource Management modules in connection with allocated and /or free radio resources (8a, 8b; 9a, 9b) between the first radio communication system and the second radio communication system;
**characterised in that** exchanging the status information is triggered by changes of resource allocation in at least one of the first and second radio communication systems (2, 3);
- allocating radio resources in at least one of the first and second radio communication systems in accordance with said status information; when executed in operative connection with the respective corresponding Radio Resource Management module (10, 12).
- requesting and / or proposing additional resources from / to the second radio communication system (3) by the first radio communication system (2);
- deciding by the Radio Resource Management module (12) of the second radio communication system (3) whether or not to lend / borrow the requested / proposed resources based on its own status in connection with allocated and / or free radio resources (9a, 9b).

6. A Radio Resource Management module (10, 12) for use in a radio communication system (2, 3) owning a predefined spectrum (8a, 9a) for allocating radio resources, comprising:
- means (19, 22) for determining status information in connection with allocated and /or free radio resources of the radio communication system (2, 3);
- means (20, 23) for transmitting the status information to a Cooperative Spectrum Sharing Radio Resource Management module (11, 11a) in operative connection with at least said radio communication system (2, 3);
- means (21, 24) for allocating radio resources in accordance with control signalling received from the Cooperative Spectrum Sharing Radio Resource Management module (11, 11a);
the Radio Resource management module **characterised in that** exchanging the status information is triggered by changes of resource allocation in at least one of the first and second radio communication systems (2, 3), the Radio Resource Management module (10, 12) further comprising:
- means for requesting and / or proposing additional resources from / to the second radio communication system (3) by the first radio communication system (2);
- means for deciding by the Radio Resource Management module (12) of the second radio communication system (3) whether or not to lend / borrow the requested / proposed resources based on its own status in connection with allocated and / or free radio resources (9a, 9b).

7. A radio communication network (1), comprising:
- at least a first radio communication system (2) covering a first area (4), the first radio communication system owning a predefined spectrum (8a) for allocating radio resources;
- at least a second radio communication system (3) covering a second area (5), the second radio communication system owning a predefined spectrum (9a) for allocating radio resources distinct from the predefined spectrum of the first radio communication system;
- a first Radio Resource Management module (10) and a second Radio Resource Management module (12) for radio resource allocation in the first radio communication system and the second radio communication system, respectively;
- at least one Cooperative Spectrum Sharing Radio Resource Management module (CSS-RRM) (11, 11a) associated with one of the first radio communication system and the second radio communication system and adapted to decide whether to use radio resources from the first radio communication system and / or the second radio communication system for providing radio services,
wherein the first radio communication system and the second radio communication system are connected for exchanging status information provided by said Radio Resource Management modules in connection with allocated and /or free radio resources, and wherein the at least one Cooperative Spectrum Sharing Radio Resource Management module is adapted to control allocating of radio resources in at least one of the first and second radio communication systems in accordance with said status information, **characterised in that** exchanging the status information is triggered by changes of resource allocation in at least one of the first and second radio communication systems (2, 3).

8. The radio communication network (1) of claim 8, **characterised in that** the first and second radio communication systems (2, 3) are connected to a dedicated network signalling path (13) for exchanging said status information.

## Patentansprüche

1. Verfahren zur Aufteilung von Funkressourcen zwischen mindestens einem ersten Funkkommunikationssystem (2) und einem zweiten Funkkommunikationssystem (3), wobei ein jedes der besagten Funkkommunikationssysteme ein jeweiliges vordefiniertes Spektrum (8, 9) für die Zuweisung von Ressourcen besitzt, wobei jede Zuweisung an einem jeweiligen Funkzuweisungsverwaltungsmodul (10, 12) durchgeführt wird, wobei das besagte Verfahren die folgenden Schritte umfasst:
- Austauschen von von den besagten Funkzuweisungsverwaltungsmodulen in Verbindung mit zugewiesenen und/oder freien Funkressourcen (8a, 8b; 9a, 9b) bereitgestellten Statusinformationen zwischen dem ersten Funkkommunikationssystem und dem zweiten Funkkommunikationssystem;
- Zuweisen von Funkressourcen in mindestens entweder dem ersten oder dem zweiten Funkkommunikationssystem gemäß den besagten Statusinformationen;
**dadurch gekennzeichnet, dass** der Austausch von Statusinformationen durch Änderungen der Ressourcenzuweisung in mindestens entweder dem ersten oder dem zweiten Funkkommunikationssystem (2, 3) ausgelöst wird, wobei das Verfahren weiterhin die folgenden Schritte umfasst:
- Anfordern und / oder Anbieten von zusätzlichen Ressourcen von dem / an das zweite(n) Funkkommunikationssystem (3) durch das erste Funkkommunikationssystem (2);
- Entscheiden, durch das Funkzuweisungsverwaltungsmodul (12) des zweiten Funkkommunikationssystems (3), ob die angeforderten / angebotenen Ressourcen verliehen / ausgeliehen werden sollen, auf der Basis seines eigenen Status in Verbindung mit zugewiesenen und / oder freien Funkressourcen (9a, 9b).

2. Verfahren nach Anspruch 1, **dadurch gekennzeichnet, dass** die Statusinformationen über einen dedizierten Signalisierungspfad (13) zwischen dem ersten Funkkommunikationssystem (2) und dem zweiten Funkkommunikationssystem (3) ausgetauscht werden.

3. Verfahren nach Anspruch 1, weiterhin umfassend:
- Prüfen, durch das erste Funkkommunikationssystem (2), ob mindestens ein Teil des ihm gehörenden Spektrums (8) für die Zuweisung von angeforderten Ressourcen geeignet ist;
- Verwenden mindestens eines Teils der freien Ressourcen (9) des zweiten Funkkommunikationssystems (3) für die Zuweisung mindestens eines Teils der angeforderten Ressourcen.

4. Verfahren nach Anspruch 1, umfassend das Durchführen des besagten Verfahrens, wenn sowohl das besagte erste als auch das besagte zweite Funkkommunikationssystem (2, 3) in einem für das Aufteilen von Ressourcen vorgesehenen Bereich existieren.

5. Computerprogramm-Produkt zur Verwendung bei der Aufteilung von Funkressourcen (8, 9) zwischen mindestens einem ersten Funkkommunikationssystem (2) und einem zweiten Funkkommunikationssystem (3), wobei ein jedes der besagten Funkkommunikationssysteme ein jeweiliges vordefiniertes Spektrum (8a, 9a) für die Zuweisung von Ressourcen besitzt, wobei die besagte Zuweisung an einem jeweiligen Funkzuweisungsverwaltungsmodul (10, 12) durchgeführt wird, wobei das besagte Computerprogramm-Produkt Codefolgen umfasst, welche in der Lage sind, die folgenden Schritte zu veranlassen:
- Austauschen von von den besagten Funkzuweisungsverwaltungsmodulen in Verbindung mit zugewiesenen und/oder freien Funkressourcen (8a, 8b; 9a, 9b) bereitgestellten Statusinformationen zwischen dem ersten Funkkommunikationssystem und dem zweiten Funkkommunikationssystem;
**dadurch gekennzeichnet, dass** der Austausch der Statusinformation durch Änderungen der Ressourcenzuweisung in mindestens entweder dem ersten oder dem zweiten Funkkommunikationssystem (2, 3) ausgelöst wird;
- Zuweisen von Funkressourcen in mindesten entweder dem ersten oder dem zweiten Funkkommunikationssystem gemäß den besagten Statusinformationen;
bei Ausführung in Wirkverbindung mit dem jeweiligen entsprechenden Funkressourcenverwaltungsmodul (10, 12).
- Anfordern und / oder Anbieten von zusätzlichen Ressourcen von dem / an das zweite Funkkommunikationssystem (3) durch das erste Funkkommunikationssystem (2);
- Entscheiden, durch das Funkzuweisungsverwaltungsmodul (12) des zweiten Funkkommunikationssystems (3), ob die angeforderten / angebotenen Ressourcen verliehen / ausgeliehen werden sollen, auf der Basis seines eigenen Status in Verbindung mit zugewiesenen und / oder freien Funkressourcen (9a, 9b).

6. Funkzuweisungsverwaltungsmodul (10, 12) zur Verwendung in einem Funkkommunikationssystem (2, 3), welches ein vordefiniertes Spektrum (8a, 9a) für die Zuweisung von Funkressourcen besitzt, umfassend:
- Mittel (19, 22) zum Ermitteln von Statusinformationen in Verbindung mit zugewiesenen und / oder freien Funkressourcen des Funkkommunikationssystems (2, 3);
- Mittel (20, 23) zum Übertragen der Statusinformationen an ein Funkzuweisungsverwaltungsmodul für die kooperative Spektrumsaufteilung (11, 11a) in Wirkverbindung mit zumindest dem besagten Funkkommunikationssystem (2, 3);
- Mittel (21, 24) zum Zuweisen von Funkressourcen gemäß einer von dem Funkzuweisungsverwaltungsmodul für die kooperative Spektrumsaufteilung (11, 11a) empfangenen Steuersignalisierung;
wobei das Funkzuweisungsvervualtungsmodul **dadurch gekennzeichnet ist, dass** der Austausch der Statusinformationen durch Änderungen der Ressourcenzuweisung in mindestens entweder dem ersten oder dem zweiten Funkkommunikationssystem (2, 3) ausgelöst wird, wobei das Funkzuweisungsvervvaltungsmodul (10, 12) weiterhin umfasst:
- Mittel zum Anfordern und / oder Anbieten von zusätzlichen Ressourcen von dem / an das zweite(n) Funkkommunikationssystem (3) durch das erste Funkkommunikationssystem (2);
- Mittel zum Entscheiden, durch das Funkzuweisungsverwaltungsmodul (12) des zweiten Funkkommunikationssystems (3), ob die angeforderten / angebotenen Ressourcen verliehen / ausgeliehen werden sollen, auf der Basis seines eigenen Status in Verbindung mit zugewiesenen und / oder freien Funkressourcen (9a, 9b).

7. Funkkommunikationsnetzwerk (1), umfassend:
- mindestens ein erstes Funkkommunikationssystem (2), welches einen ersten Bereich (4) abdeckt, wobei das erste Funkkommunikationssystem ein vordefiniertes Spektrum (8a) zum Zuweisen von Funkressourcen umfasst;
- mindestens ein zweites Funkkommunikationssystem (3), welches einen zweiten Bereich (5) abdeckt, wobei das zweite Funkkommunikationssystem ein vordefiniertes Spektrum (9a) zum Zuweisen von Funkressourcen umfasst, welches sich von dem vordefinierten Spektrum des ersten Funkkommunikationssystems unterscheidet;
- ein erstes Funkzuweisungsverwaltungsmodul (10) und ein zweites Funkzuweisungsverwaltungsmodul (12) für das Zuweisen von Funkressourcen in dem ersten Funkkommunikationssystem bzw. in dem zweiten Funkkommunikationssystem;
- mindestens ein Funkzuweisungsverwaltungsmodul für die kooperative Spektrumsaufteilung (CSS-RRM) (11, 11a), welches entweder mit dem ersten Funkkommunikationssystem oder mit dem zweiten Funkkommunikationssystem assoziiert und dazu ausgelegt ist, zu entscheiden, ob Funkressourcen von dem ersten Funkkommunikationssystem und / oder von dem zweiten Funkkommunikationssystem für das Bereitstellen von Funkdiensten benutzt werden sollen,
wobei das erste Funkkommunikationssystem und das zweite Funkkommunikationssystem verbunden sind, um von den besagten Funkzuweisungsverwaltungsmodulen in Verbindung mit zugewiesenen und / oder freien Funkressourcen bereitgestellte Statusinformationen auszutauschen, und wobei das mindestens eine Funkzuweisungsverwaltungsmodul für die kooperative Spektrumsaufteilung dazu ausgelegt ist, die Zuweisung von Funkressourcen in mindestens entweder dem ersten oder dem zweiten Funkkommunikationssystem gemäß den besagten Statusinformationen zu steuern, **dadurch gekennzeichnet, dass** der Austausch der Statusinformationen durch Änderungen der Ressourcenzuweisung in mindestens entweder dem ersten oder dem zweiten Funkkommunikationssystems (2, 3) ausgelöst wird.

8. Funkkommunikationsnetzwerk (1) nach Anspruch 8, **dadurch gekennzeichnet, dass** das erste und das zweite Funkkommunikationssystem (2, 3) an einen dedizierten Netzwerksignalisierungspfad (13) für den Austausch der besagten Statusinformationen angeschlossen sind.

## Revendications

1. Procédé de partage de ressources radio entre au moins un premier système de radiocommunication (2) et un deuxième système de radiocommunication (3), chacun desdits systèmes de radiocommunication possédant un spectre prédéfini (8, 9) respectif pour allouer des ressources, ladite allocation étant réalisée dans un module de gestion de ressources radio (10, 12) respectif, ledit procédé comprenant les étapes suivantes :
- échanger des informations d'état fournies par lesdits modules de gestion de ressources radio en relation avec des ressources radio allouées et/ou libres (8a, 8b ; 9a, 9b) entre le premier système de radiocommunication et le deuxième système de radiocommunication ;
- allouer des ressources radio dans au moins un parmi les premier et deuxième systèmes de radiocommunication conformément auxdites informations d'état ;
**caractérisé en ce que** l'échange des informations d'état est déclenché par des changements d'allocation de ressources dans au moins un parmi les premier et deuxième systèmes de radiocommunication (2, 3), le procédé comprenant en outre les étapes suivantes :
- demander et/ou proposer des ressources supplémentaires à partir/vers le deuxième système de radiocommunication (3) au moyen du premier système de radiocommunication (2) ;
- décider au moyen du module de gestion de ressources radio (12) du deuxième système de radiocommunication (3) s'il faut prêter/emprunter ou non les ressources demandées/proposées sur la base de son propre état en relation avec des ressources radio allouées et/ou libres (9a, 9b).

2. Procédé selon la revendication 1, **caractérisé en ce que** les informations d'état sont échangées sur un trajet de signalisation de réseau dédié (13) entre le premier système de radiocommunication (2) et le deuxième système de radiocommunication (3).

3. Procédé selon la revendication 1, comprenant en outre les étapes suivantes :
- vérifier, au moyen du premier système de radiocommunication (2), si au moins une partie de son spectre (8) possédé est adaptée à l'allocation de ressources demandées ;
- utiliser au moins une partie des ressources libres (9) du deuxième système de radiocommunication (3) pour allouer au moins une partie des ressources demandées.

4. Procédé selon la revendication 1 comprenant la mise en oeuvre dudit procédé si lesdits premier et deuxième systèmes de radiocommunication (2, 3) existent dans une zone envisagée pour le partage de ressources.

5. Produit de programme informatique à utiliser pour partager des ressources radio (8, 9) entre au moins un premier système de radiocommunication (2) et un deuxième système de radiocommunication (3), dans lequel chacun desdits systèmes de radiocommunication possède un spectre prédéfini (8a, 9a) respectif pour allouer des ressources, ladite allocation étant réalisée dans un module de gestion de ressources radio (10, 12) respectif, ledit produit de programme informatique comprenant des séquences de code permettant :
- d'échanger des informations d'état fournies par lesdits modules de gestion de ressources radio en relation avec des ressources radio allouées et/ou libres (8a, 8b ; 9a, 9b) entre le premier système de radiocommunication et le deuxième système de radiocommunication ;
**caractérisé en ce que** l'échange des informations d'état est déclenché par des changements d'allocation de ressources dans au moins un parmi les premier et deuxième systèmes de radiocommunication (2,3) ;
- d'allouer des ressources radio dans au moins un parmi les premier et deuxième systèmes de radiocommunication conformément auxdites informations d'état ;
lorsqu'il est exécuté en relation opérationnelle avec le module de gestion de ressources radio (10, 12) respectif correspondant.
- de demander et/ou de proposer des ressources supplémentaires à partir/vers le deuxième système de radiocommunication (3) au moyen du premier système de radiocommunication (2) ;
- de décider au moyen du module de gestion de ressources radio (12) du deuxième système de radiocommunication (3) s'il faut prêter/emprunter ou non les ressources demandées/proposées sur la base de son propre état en relation avec des ressources radio allouées et/ou libres (9a, 9b).

6. Module de gestion de ressources radio (10, 12) à utiliser dans un système de radiocommunication (2, 3) possédant un spectre prédéfini (8a, 9a) pour allouer des ressources radio, comprenant :
- moyens (19, 22) pour déterminer des informations d'état en relation avec des ressources radio allouées et/ou libres du système de radiocommunication (2, 3) ;
- moyens (20, 23) pour transmettre les informations d'état à un module de gestion de ressources radio à partage de spectre coopératif (11, 11a) en relation opérationnelle avec au moins ledit système de radiocommunication (2, 3) ;
- moyens (21, 24) pour allouer des ressources radio conformément à la signalisation de contrôle provenant du module de gestion de ressources radio à partage de spectre coopératif (11, 11a) ;
le module de gestion de ressources radio étant **caractérisé en ce que** l'échange des informations d'état est déclenché par des changements d'allocation de ressources dans au moins un parmi les premier et deuxième systèmes de radiocommunication (2, 3), le module de gestion de ressources radio (10, 12) comprenant en outre :
- moyens pour demander et/ou proposer des ressources supplémentaires à partir/vers le deuxième système de radiocommunication (3) au moyen du premier système de radiocommunication (2) ;
- moyens pour décider au moyen du module de gestion de ressources radio (12) du deuxième système de radiocommunication (3) s'il faut prêter/emprunter ou non les ressources demandées/proposées sur la base de son propre état en relation avec des ressources radio allouées et/ou libres (9a, 9b).

7. Réseau de radiocommunication (1) comprenant :
- au moins un premier système de radiocommunication (2) couvrant une première zone (4), le premier système de radiocommunication possédant un spectre prédéfini (8a) pour allouer des ressources radio ;
- au moins un deuxième système de radiocommunication (3) couvrant une deuxième zone (5), le deuxième système de radiocommunication possédant un spectre prédéfini (9a) pour allouer des ressources radio distinct du spectre prédéfini du premier système de radiocommunication ;
- un premier module de gestion de ressources radio (10) et un deuxième module de gestion de ressources radio (12) pour l'allocation de ressources radio dans le premier système de radiocommunication et le deuxième système de radiocommunication, respectivement ;
- au moins un module de gestion de ressources radio à partage de spectre coopératif (CSS-RRM) (11, 11a) associé à un système parmi le premier système de radiocommunication et le deuxième système de radiocommunication et adapté pour décider s'il faut utiliser des ressources radio à partir du premier système de radiocommunication et/ou du deuxième système de radiocommunication pour fournir des services radio,
dans lequel le premier système de radiocommunication et le deuxième système de radiocommunication sont connectés pour échanger des informations d'état fournies par lesdits modules de gestion de ressources radio en relation avec des ressources radio allouées et/ou libres, et dans lequel l'au moins un module de gestion de ressources radio à partage de spectre coopératif est adapté pour commander l'allocation de ressources radio dans au moins un système parmi les premier et deuxième systèmes de radiocommunication conformément auxdites informations d'état, **caractérisé en ce que** l'échange des informations d'état est déclenché par des changements d'allocation de ressources dans au moins un système parmi les premier et deuxième systèmes de radiocommunication (2, 3).

8. Réseau de radiocommunication (1) selon la revendication 8, **caractérisé en ce que** les premier et deuxième systèmes de radiocommunication (2, 3) sont connectés à un trajet de signalisation de réseau dédié (13) pour échanger lesdites informations d'état.
